# EUROPEAN PATENT APPLICATION

(11) **EP 0 568 327 A2**
(43) Date of publication of application: **03.11.1993**
(21) Application number: 93303299.7
(22) Date of filing: 27.04.1993
(51) Int. Cl.: B60R 22/28

(54) **Vehicle passenger restraint systems**

(30) Priority: 29.04.1992 GB 9209187
(71) Applicant: ALLIEDSIGNAL LIMITED, Kingswood, Bristol BS15 2NL (GB)
(72) Inventor: Aiston, Brian Edward, Carlisle, Cumbria CA4 0QS (GB); Blackadder, David, Corby Hill, Carlisle (GB); Foster, Howard James, Carlisle, Cumbria CA1 2PF (GB)
(74) Representative: W.P. THOMPSON & CO.

(57) **Abstract**

In a vehicle passenger safety restraint system a force limiting device is incorporated which includes a progressively frangible or deformable tube which during a crash is acted upon by a deforming member to progressively reduce or extend the effective support length of the tube thereby absorbing energy from an occupant and limiting the force exerted on the occupant by the restraint webbing.

## Description

This invention relates to a vehicle passenger restraint system and more especially to a seat belt system.

Vehicle passenger restraint systems typically comprise a harness including a generally horizontal lap strap and generally vertical body straps passing over the passengers' shoulders or a lap and diagonal harness or simply a lap strap.

A typical restraint system as used in passenger cars comprises a lap and diagonal webbing restraint in which the webbing paid out from a webbing retractor and via a shoulder-height guide loop passes diagonally downwards to a buckling tongue engageable in a buckle anchored on one side of the passenger seat. The webbing then passes across the seat (as a lap restraint) to a final anchorage point at the other side of the seat. With such a system, localised and very substantial forces are exertable on the occupants body in restraining the occupant in the event of a crash. Moreover, the forces exerted on the diagonal part by the occupant can be such as to result in tightening the lap part of the webbing around the hips of the occupant accompanied by some pay-out of the diagonal portion. Such pay-out therefore allows forward movement of the head and shoulders. Such forward movement can itself result in injury due to impacts within the vehicle and forces exerted between the webbing and an occupant can also cause injury.

The object of the present invention is to reduce forces exerted between a seat belt restraint and an occupant and thereby reduce the possibility of injury resulting from a crash situation.

According to the present invention there is provided a vehicle passenger restraint system including a seat belt for passing between an anchorage point on one side of a seat and an anchorage point on the other side of the seat the seat belt being connected to at least one of said anchorage points via a force limiting device the limiting force exertable via which is predetermined to be substantially less than the force otherwise exertable via the belt through to the anchorage point characterised in that the force limiting device comprises a deformable supporting tubular member located at one end and acted upon by a deforming member in a sense to progressively extend or reduce the effective supporting length of the tubular member said limiting force being thereby sustainable for an extended period of time whereby kinetic energy of the occupant is transformed into power absorbed by the force limiting device.

In order that the invention may be more clearly understood and readily carried into effect the invention will now be further described by way of several examples with reference to the accompanying drawings of which
- Fig. 1,: illustrates a typical passenger car seat belt arrangement
- Fig. 2,: illustrates a force limiting device for use in a system such as that of Fig. 1 employing a collapsible tube
- Fig. 3,: illustrates a force limiting device for use in a system such as that of Fig. 1, employing a compressible tube
- Fig. 4,: illustrates a force limiting device for use in a system such as that of Fig. 1, employing a deformable tube
- Figs. 5,6 and 7,: illustrate alternative deformable tube sections
- Fig. 8,: illustrates yet another example accommodating a smaller diameter tube and
- Fig. 9,: illustrates an example using pressed steel sections and a smaller diameter tube.

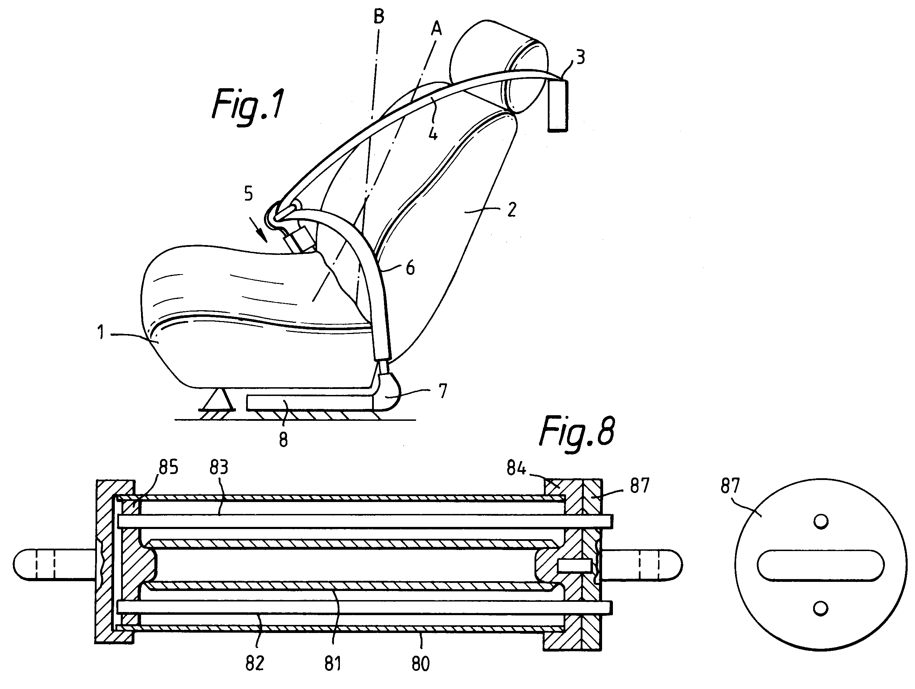

Referring to Fig. 1, the vehicle passenger restraint system includes a seat having a seat squab portion 1 and a seat back portion 2, the latter typically being manually tiltable in a conventional manner. Assuming the seat is installed as a front seat in a passenger car, the restraint webbing is fed out from an emergency locking type of webbing retractor, concealed in the "B" post of the car body at one side of the seat and emanates via a shoulder height guide loop at 3 to pass diagonally as at 4 downwards across the torso of an occupant through a buckling tongue 5 engaged in a buckle anchored on the other side of the seat. Webbing 6 coming away from the buckling tongue passes across the lap of the occupant to a connection to an anchoring means 7 on the side nearest the viewer of the drawing. The anchoring means 7 incorporates a force limiting device 8 designed and constructed to submit in a controlled manner to a predetermined limited force value by way of movement whilst sustaining forces up to said value.

Various forms of force limiting device suitable for use in a system according to the invention will be described below.

Considering now the operation of the system, in the event of a frontal collision being encountered by the vehicle the emergency locking retractor senses a predetermined deceleration value of the vehicle and the retractor locks the webbing portion 4 against withdrawal movement via the guide 3. As the collision progresses the said deceleration increases as do the inertial forces exerted by the occupant on the belt portion 4 and the belt portion 6 of the restraint. When the tension in the portion 6 attains a predetermined force limit value (typically 5 KN) the force limiting device 8 submits to such initial maximum force to the extent of permitting payout whilst maintaining no more than such as a restraining force at the anchorage 7. Such pay-out allows a few centimetres of forward movement of the portion 8 and occupant at the hips and since some sliding of the belt can occur at the buckle, forward movement has the effect of transferring kinetic energy of the occupant progressively as power to the force limiting device and thereby limiting the level of the impulsive forces applied to the occupant by the safety restraint webbing and also thereby reducing the probability of head and neck injury occurring.

In the drawing (Fig. 1), diagrammatic illustration is given of the extent of torso movement (A) of a seat occupant with a force limiting device fitted to the restraint system and the extent of torso movement (B) of an occupant restrained by a system without such a restraint fitted. In (A) the hips of an occupant are permitted to move in a controlled manner due to the limiter introducing slack to the lap portion of the belt. The upper torso then tends to move in a translational manner rather than pivoting excessively about the hips. Forward movement of the occupants head and chest is thereby less as also are the sustained belt forces.

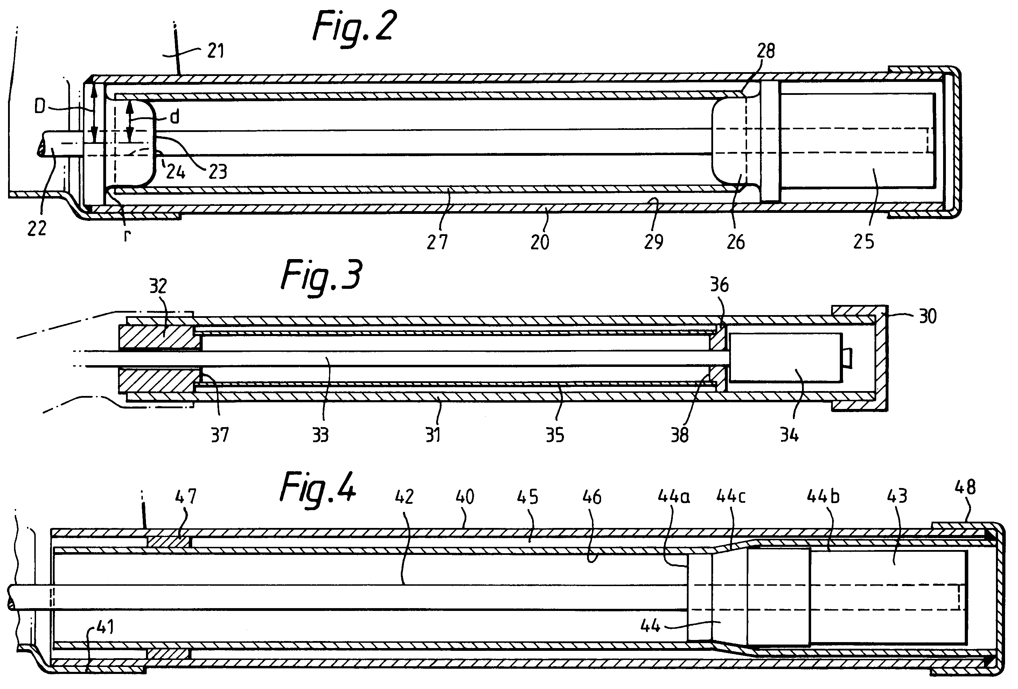

A preferred form of force-limiting device is illustrated in Fig. 2 which shows an outer steel tube 20 which forms a main housing attached to a metal end pressing 21 for receiving and smoothly guiding an anchorage cable 22 for connection to 7 of Fig. 1. Conveniently the metal tube 20 is mounted horizontally in the vehicle body and adjacent the door sill of the vehicle and the pressing 21 therefore leads the cable 22 into an approximately vertical direction (not shown). Between the pressing 21 and the adjacent end of tube 20, a fixed hard metal deforming member comprising a shaped end-plug 23 is located and welded in position. The plug 23 has a relatively larger diameter part of diameter D, which fits within the tube 20 and a relatively smaller diameter portion of diameter 'd', to fit within an inner energy absorbing frangible deformable tube 27. The transition between the two diameters of the deforming members 26 and 23 takes place via a radiused region the radius 'r' of which is typically chosen to be 1.2t where t is the thickness of the wall of the frangible tube 27. The plug 23 also has an axial bore 24 to slidingly receive the cable 22 which passes through the tube 20 to a cable crimp block 25 which forms an end-stop for a further axially moveable trigger or shaped plug 26 slideable within the bore 29 of the main tube. The trigger 28 is conveniently also shaped as 23 with domed central portion which fits the end of a frangible inner tube 27. The respective domed shapes and dimensions are such as to cause the frangible tube 27 to progressively collapse radially outwards, under compression such collapse being assisted by chamfering such as 28 of the end of the tube which receives the moveable trigger. The right hand end of the tube, namely the end opposite the pressing 21 is fitted with an end cap 30 to complete the enclosure.

The inner frangible tube 27 is formed of wound layers of resin-impregnated woven glass fibre the thickness of which is suitably chosen to require a predetermined internal compressive force to be applied before collapse thereof occurs due to tension in the anchorage cable 22. Since (say) the member 28 causes progressive collapse of the inner tube from the right hand end whilst the critical force is applied, the effective supporting length of tube 27 is progressively reduced and kinetic energy is is absorbed thereby whilst also permitting corresponding progressive increase of the effective length of the restraint webbing 6 of Fig. 1 plus the wire 22. The pay-out of the restraint is determined by the axial distance between triggers 23 and 26 and the duration of the critical force up to a given duration depending upon the vehicle deceleration experienced.

An alternative form of force limiting device is shown in Fig. 3 in which the construction is similar to that of Fig. 1. A main outer tubular housing 31 carries an end stop 32 via which the anchorage cable 33 extends axially to a cable-crimp 34. A compressible inner tube 35 is axially located between the end stop 32 and a deforming member 36 retained by the cable-crimp 34. The stop 32 and deforming member 38 are provided with a spigot 37, 38 respectively to receive and locate the ends of the inner deformable metal tube 35 which is typically of aluminium or thin mild steel, the wall thickness being chosen to permit the tube to progressively collapse in known manner on being subject to a sustained predetermined compressive force. Such collapse takes place as a succession of annular pleats of substantially constant diameter.

In yet another form of force limiting device as shown in Fig. 4 a main tubular housing 40, receives an anchorage cable 42 as before via a cable guide pressing 41 at one end of the tube the cable being terminated at the other end of the tube by a crimp 43. Supported coaxially by a collar 47 within the tubular housing 40 against the pressing 41 there is an inner deformable tube 45 now solidly welded to the outer tube 40 at the other end of the tube within an end cap 48.

The tube 45 is circumferentially deformable by a shaped internal deforming member 44 having two diameters the first of which 44a slidingly fits the undeformed inner tube 46 diameter and a larger diameter forming portion 44b. The two diameters are joined by a frusto-conical portion 44c. The tube 45 has a longitudinal slit permitting the former 44 to be driven into it. On assembly, the member 44 is driven into the bore 48 of the inner tube 45 before welding and placing the end cap 48 in position. In this case the force limiter permits the member 44 to be drawn progressively leftwards along the tube whilst expanding its internal diameter and progressively using power driven from the changing kinetic energy of the occupant of the seat. In this case, the supporting length of the tube 45 progressively increases since the inner tube 45 is in tension and it has no tendency to buckle and to impair the correct operation. However the outer tube 40 is required to be able to withstand all the resultant compressive forces acting thereon.

By suitable choice of the material and relative dimensions of the wall thickness of the inner tube 45 in Fig. 4 and the member 44, the longitudinal slit may be dispensed with entirely. Alternatively the slit may extend only part of the length of the tube so that part of the length of the tube so that sequentially occurring different limiting forces may be designed into the force limiting device.

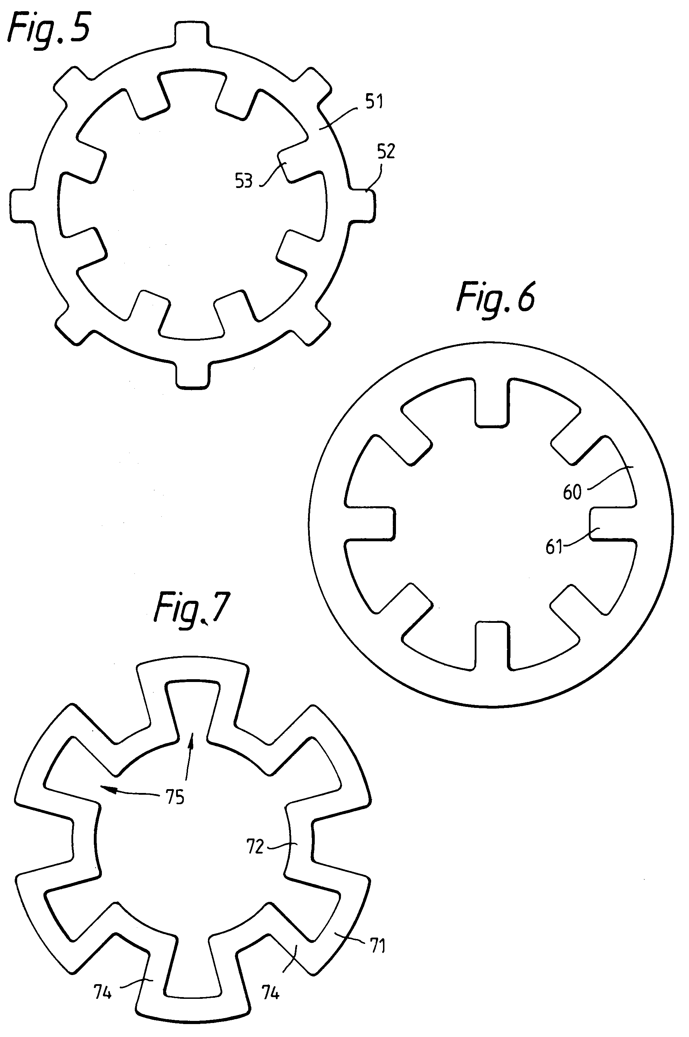

In a further modification of the embodiment of a force limiting device as described with reference to Fig. 4, the inner deformable tube 45 may be formed as an aluminium or similar material extrusion 51 the extended section of which is as shown for example in Fig. 5. The extrusion 51 is seen to have uniformly spaced outwardly radially extending splines such as 52 and at intermediate angular positions relative to 52 there are inwardly radially projecting splines 53. The outward splines 52 present a maximum diameter which loosely fits within the main outer tube 40 of the device. The smaller diameter of a axially movable deforming member such as 44 (Fig. 4) fits within the internal diameter defined by splines 53. The extrusion may be arranged to be supported at one end or the other and thereby to be in tension or in compression during operation of the force limiter. When a predetermined force is applied to the cable, the former 44 is progressively drawn along the exterior of the extrusion 51 absorbing power by deforming it by bending the annular section between the successive splines.

Another alternative extrusion section, typically of aluminium, which may be adopted instead of an extrusion as shown in Fig. 5 is an extrusion as shown in Fig. 6. In such an extrusion only radially inwardly directed spaced splines 61 are provided within the tube 60 and the deforming member (44 in Fig. 4) is designed to effect radially outward compressive deformation of the splines 81 as it is progressively drawn along the extruded tube thereby absorbing power driven from the changing kinetic energy of the occupant of the seat restraint system. The extrusion of Fig. 6 can afford the advantage that it may conveniently constitute its own housing and the main outer tube of Fig. 4 may be dispensed with in the interests of reduced cost.

Yet another alternative extrusion section typically also of aluminium is shown in Fig. 7. The extrusion comprises six spaced inner and outer circular arcuate parts represented by references 71 and 72 respectively, radially joined at their ends by radial joining parts 73. This extrusion is again intended to be mounted as the inner tube 45 in the force limiting device of Fig. 4. When the internal former is drawn along the interior of the extrusion, it results in progressive expansion of gaps 75 between arcuate parts 72, the deformation being in the nature of bending deformation of the radially extending portions. Again the thickness of the extrusion is chosen to permit the former 44 to be drawn through the extrusion only when a predetermined force is applied.

By employing a combination in succession of different and shorter extrusion sections in place of a single full length extrusion, a load-limiting device which presents a variable force-limiting characteristic over its operating length can be constructed if required.

In an alternative force limiting device which employs either a deformable tube of the type illustrated in Fig. 2 or Fig. 3, and as now illustrated in Fig. 8, the compressible or frangible tube 81 may be designed to be of rather smaller diameter relative to the housing. The anchorage cable may then pass in two parts 82 and 83 within a housing tube 80 and disposed on diametrically opposite sides of the inner tubular member 81 rather than axially through it. As seen in Fig. 8 the two parts pass from a coupling member 87 and then slidingly through the end part 84 of the housing but are finally fixed to a movable deforming member 85. Alternatively the inner frangible or compressible member 81 may not be a tube but may be solid or have other more sophisticated deformable configuration.

A vehicle passenger restraint system in accordance with the invention may be arranged to exhibit different operating characteristics by selecting the predetermined limiting force or forces and choice of location of the force limiting device or devices in the system.

By way of yet another alternative to the system of Fig. 1 wherein a force limiting device is located specifically at the fixed anchorage on one side of the seat, a force limiting device may therefore additionally or alternatively be included in the anchorage for the buckle which receives the buckle 5. In the latter case the action of the force limiting device will be to permit forward movement both of the diagonal portion 4 and the lap portion 8 of the belt webbing, albeit with a possibility of slightly increased forward motion of this part of the body of the occupant. The two force limiters may be designed to exhibit different chosen limit forces if required.

In yet another variant of the system of Fig. 1, a force limiting device may be included at the mounting point of the emergency locking retractor or at the shoulder height guide loop. The presence of such a force limiting device will tend to increase the forward movement of the torso permitted by the diagonal portion of the seat belt system beyond the angle A (Fig. 1) but it will reduce the forces exerted on the occupants shoulder by the belt webbing.

## Claims

1. A vehicle passenger restraint system including a seat belt (4.6) for passing between an anchorage point (7) on one side of a seat and an anchorage point (5) on the other side of the seat the seat belt being connected to at least one of said anchorage points via a force limiting device (8), the limiting force exertable via which is predetermined to be substantially less than the force exertable via the belt (4,6) through to the one anchorage point characterised in that the force limiting device comprises a frangible or deformable supporting tubular member (27;35;45;81) located at one end and acted upon by a deforming member (26;38;44) in a sense to progressively extend or to progressively reduce the effective supporting length of the tubular member.

2. A vehicle passenger restraint system as claimed in claim 1 characterised in that said deformable supporting tubular member comprises a frangible tube (27).

3. A vehicle passenger restraint system as claimed in claim 1, characterised in that said deformable supporting tubular member comprises a progressively collapsible tubular member (35) in compression.

4. A vehicle passenger restraint system as claimed in claim 1 characterised in that said deformable supporting tubular member comprises a tube (45) member in tension and said deforming member comprises a shaped element (44) which can be drawn progressively along the interior of the tube increasing its internal periphery.

5. A vehicle restraint system as claimed in claim 4, characterised in that said tube (66) has an extruded shape having spaced internal radially extending projections (61).

6. A vehicle restraint system as claimed in claim 4 characterised in that said tube (51) has first spaced radially inward and second spaced radially outward projections (52) positioned angularly between the first projections (53).

7. A vehicle restraint system as claimed in claim 4 characterised in that said tube has an extruded shape comprising a plurality of first parts (71) lying generally one one circumference and a plurality of second parts (72) lying generally on a relatively smaller diameter and joined to said first parts by generally radial parts (74) to form a continuum.

8. A vehicle restraint system as claimed in any preceding claim characterised in that said restraint is connected to the limiting device by a means such as cable which passes axially through the tube and is coupled to said deforming member.

9. A vehicle restraint system as claimed in claim 1, 2 or 3 characterised in that said restraint is connected to the limiting device by means such as cables which pass axially alongside the tube and are coupled to the deforming member.
